# EUROPÄISCHE PATENTSCHRIFT

(11) **EP 1 830 185 B1**
(45) Veröffentlichungstag und Bekanntmachung des Hinweises auf die Patenterteilung: **10.07.2013**
(21) Anmeldenummer: 07003734.6
(22) Anmeldetag: 23.02.2007
(51) Int. Cl.: G01N 29/11, G01N 29/22, G01N 29/26, G01N 29/28, G01N 29/34, G01N 29/48

(54) **Verfahren zur Ultraschallprüfung eines Werkstückes in einem gekrümmten Bereich seiner Oberfläche und zur Durchführung des Verfahrens geeignete Prüfanordnung**
Method for ultrasonic inspection of a workpiece in a curvilinear area of its surface and appropriate test assembly for applying the method
Procédé de vérification à ultrasons d'une pièce à usiner dans une zone incurvée de sa surface et dispositif de vérification destiné à l'exécution du procédé

(30) Priorität: 04.03.2006 DE 102006010010
(43) Veröffentlichungstag der Anmeldung: 05.09.2007
(73) Patentinhaber: intelligeNDT Systems & Services GmbH, 91052 Erlangen (DE)
(72) Erfinder: Meier, Rainer, 91058 Erlangen (DE); Becker, Jana, 91096 Möhrendorf (DE); Rehfeldt, Thomas, 91096 Möhrendorf (DE)
(74) Vertreter: Meissner, Bolte & Partner

(56) Entgegenhaltungen:
- EP-A- 1 398 627
- US-A- 4 472 975
- US-A1- 2004 016 299

## Beschreibung

Die Erfindung bezieht sich auf ein Verfahren zur Ultraschallprüfung eines Werkstückes in einem gekrümmten Bereich seiner Oberfläche, insbesondere eines Werkstückes aus einem Faserverbundwerkstoff. Außerdem bezieht sich die Erfindung auf einen zum Durchführen des Verfahrens geeignete Prüfanordnung.

Insbesondere Werkstücke, die aus Faserverbundwerkstoffen wie z.B. glasfaserverstärkten oder kohlefaserverstärkten Kunststoffen (GFK bzw. CFK) hergestellt sind, können bedingt durch das jeweils gewählte Herstellungsverfahren eine hohe Porosität oder Delaminationen aufweisen. Dies stellt insbesondere bei mechanisch hoch beanspruchten und sicherheitsrelevanten Bauteilen ein erhebliches Problem dar.

Aus Gundtoft, Hans Erik, "Quantitative material characterisation of composites by ultrasonic scanning", 15th WCNDT Conference Roma 2000, publiziert im Internet unter der Adresse www.ndt.net/article/wcndtoo/papers/idn531/idn531.htm, ist ein Verfahren zum Ermitteln der Porosität eines Faserverbundwerkstoffes bekannt, bei dem in das Bauteil ein Ultraschallsignal eingekoppelt, die Amplitude des Rückwandechosignals erfasst und mit den entsprechenden Signalen eines einwandfreien Bauteils verglichen wird. Eine niedrigere Amplitude des Rückwandechosignals Ultraschallsignals ist dabei ein Indiz für das Vorhandensein von porösen Stellen innerhalb des Bauteils.

Aus Shark L.-K., Yu, C., "Automatic estimation of ultrasonic attenuation for porosity evaluation in composite material", lSth WCNDT Conference Roma 2000, ist es außerdem bekannt, das Rückwandechosignal mit einer sogenannten Wavelet-Analyse zu korrigieren, wobei zur Beurteilung der Porosität das Verhältnis zwischen Amplitude des Eintrittsechosignals und Amplitude des korrigierten Rückwandechosignals verwendet wird.

Die bekannten Verfahren setzen allerdings voraus, dass die zu prüfenden Bauteile eine ebene Oberfläche und eine dazu im wesentlichen parallele Rückwand aufweisen, um ein auswertbares Rückwandecho zu erhalten. Ein besonderes Problem stellt jedoch insbesondere die automatisierte Prüfung von Bauteilen in unebenen, fertigungstechnisch bedingt besonders fehleranfälligen Bereichen, beispielsweise in gekrümmten Radienbereichen oder in Bereichen, in denen das Bauteil durch Stringer versteift ist, dar. Um auch in diesen Bereichen verlässliche Prüfergebnisse zu erhalten, ist es nach wie vor erforderlich, mit Einzelschwingerprüfköpfen eine manuelle Prüfung durchzuführen.

Aus der EP 1 398 627 A2 und der US 2004/0016299 A1 sind Prüfanordnungen zum Ultraschallprüfen von Bauteilen mit gekrümmten Oberflächen bekannt, bei denen Ultraschallprüfköpfe verwendet werden, die aus einer Mehrzahl nebeneinander angeordneter einzeln ansteuerbarer Wandlerelemente aufgebaut sind.

Der Erfindung liegt nun die Aufgabe zu Grunde, ein Verfahren zur Ultraschallprüfung eines Werkstückes in einem gekrümmten Bereich seiner Oberfläche, insbesondere eines Werkstückes aus einem Faserverbundwerkstoff, anzugeben, mit dem bei hoher Prüfqualität eine weitgehende Automatisierung der Prüfung möglich ist. Außerdem liegt der Erfindung die Aufgabe zugrunde, eine zur Durchführung des Verfahrens geeignete Prüfanordnung anzugeben.

Hinsichtlich des Verfahrens wird die genannte Aufgabe gemäß der Erfindung gelöst mit einem Verfahren mit den Merkmalen des Patentanspruches 1. Gemäß diesen Merkmalen wird an das Werkstück in einem gekrümmten Bereich seiner Oberfläche ein Ultraschallprüfkopf akustisch angekoppelt, der eine aus einer Mehrzahl von nebeneinander angeordneten einzeln ansteuerbaren Wandlerelementen aufgebaute Ultraschallwandleranordnung enthält, wobei in zeitlich aufeinander folgenden Prüfzyklen jeweils eine Anzahl von Wandlerelementen zu einer Gruppe zusammengefasst und in einer Mehrzahl von Prüftakten innerhalb dieses Prüfzyklus untereinander zeitverzögert derart angesteuert werden, dass der gesendete Ultraschallstrahl in diesem Prüfzyklus in einem vorgegebenen Winkelbereich geschwenkt wird, so dass für jede Gruppe eine der Anzahl der Prüftakte entsprechende Anzahl von Echosignalen aus unterschiedlichen Richtungen des Werkstückes empfangen werden. Zur Auswertung werden die Echosignale der Prüftakte verwendet, bei denen ein von einer Rückwand des Werkstückes empfangenes Rückwandechosignal bzw. ein von der Oberfläche des Werkstückes empfangenes Eintrittsechosignal maximal ist.

Da Echosignale aus unterschiedlichen Richtungen des Werkzeuges analysiert werden können, ist die qualitative Beurteilung des Werkstückes, beispielsweise hinsichtlich seiner Porosität oder hinsichtlich des Vorliegens von Delaminationen, verbessert.

In einer bevorzugten Ausgestaltung des Verfahrens wird eine Ultraschallwandleranordnung mit einer an die Krümmung der Oberfläche angepassten gekrümmten Sende- und Empfangsfläche verwendet.

Wenn die akustische Ankopplung über eine Wasservorlaufstrecke erfolgt, ist es möglich, den von der Ultraschallwandleranordnung erzeugten Ultraschall auch bei unebenen, ungleichmäßigen Oberflächen verlustarm in das Werkstück einzukoppeln.

In einer bevorzugten Ausgestaltung des Verfahrens wird der Abstand des Ultraschallprüfkopfes zur Oberfläche verändert. Dadurch ist es möglich, den erforderlichen Winkelbereich und dementsprechend die Anzahl der in jedem Prüfzyklus erforderlichen Prüftakte auf ein zum Auffinden des maximalen Rückwandechos notwendiges Maß zu beschränken.

Hinsichtlich der Prüfanordnung wird die genannte Aufgabe gemäß der Erfindung gelöst mit einer Prüfanordnung mit den Merkmalen des Patentanspruches 5, deren Vorteile den zu den jeweils zugehörigen Verfahrensansprüchen angegebenen Vorteilen entsprechen. Vorteilhafte Ausgestaltungen dieser Prüfanordnung sind in den Unteransprüchen angegeben.

Zur weiteren Erläuterung der Erfindung wird auf das Ausführungsbeispiel der Zeichnung verwiesen. Es zeigen:
- Fig. 1 - 3: jeweils ein aus einem Faserverbundwerkstoff aufgebautes Werkstück in einem gekrümmten Bereich seiner Oberfläche in einer schematischen Schnittdarstellung,
- Fig. 4: das Werkstück gemäß Fig. 2 mit einer im Radienbereich aufgesetzten, schematisch dargestellten Prüfanordnung,
- Fig. 5: eine Prüfanordnung in einer auf ein Werkstück aufgesetzter Position in einer schematischen Schnittdarstellung,
- Fig. 6: ein grob schematisiertes, vereinfachtes Diagramm, in dem die von der Ultraschallwandleranordnung in verschiedenen Prüftakten innerhalb eines Prüfzyklus empfangenen Echosignale S gegen die Laufzeit t aufgetragen sind.

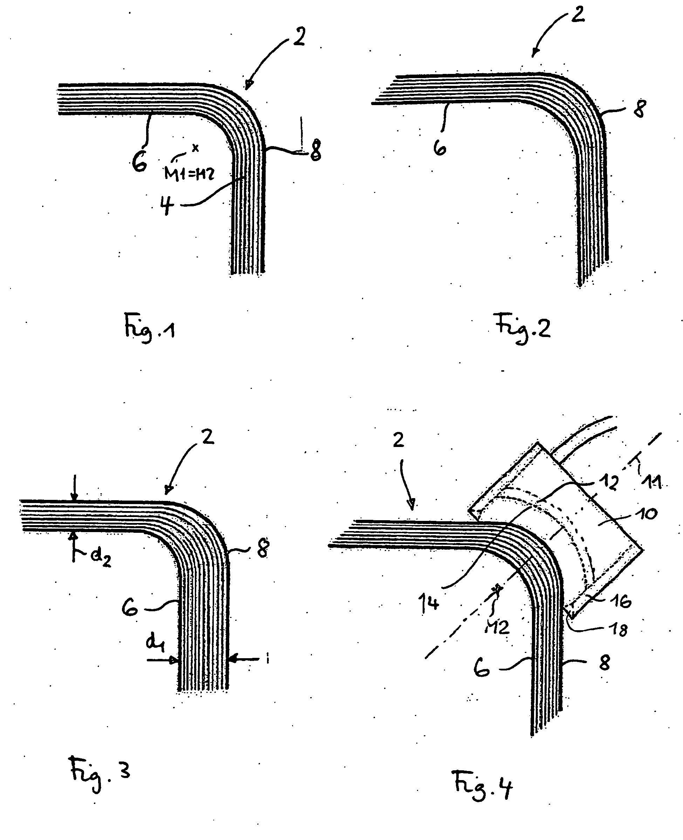

Gemäß Fig. 1 ist ein aus einen Faserverbundwerkstoff aufgebautes Werkstück 2, beispielsweise ein CFK-Bauteil aus mehreren Faserlagen 4 aufgebaut, die aufeinander laminiert sind. Das Werkstück 2 weist einen gekrümmten Oberflächenbereich auf, wobei im dargestellten Beispiel eine ideale Situation dargestellt ist, in der der Krümmungsmittelpunkt M1 des Radius der inneren konkaven Oberfläche 6 mit dem Krümmungsmittelpunkt M2 des Radius der äußeren konkaven Oberfläche 8 übereinstimmt, so dass ein in diesem Bereich senkrecht in die äußere Oberfläche 8 eingekoppelter Ultraschallstrahl auch senkrecht auf die innere Oberfläche 6 - die Rückwand - trifft.

Eine solche ideale Situation ist aber in der Praxis in der Regel nicht anzutreffen. Fig. 2 zeigt nun eine Situation, wie sie häufig zu beobachten ist, bei der die innere Oberfläche 6 und die äußere Oberfläche 8 Radienbereiche aufweisen, die nicht mehr konzentrisch zueinander sind, so dass ein senkrecht in die äußere Oberfläche 8 eingekoppelter Ultraschallstrahl nicht mehr zwangsläufig auch senkrecht auf die innere Oberfläche 6 trifft.

Eine weitere in der Praxis ebenfalls häufig anzutreffende Situation ist in Fig. 3 veranschaulicht. Dort bildet der gekrümmte Bereich eine Übergangszone zwischen zwei Bereichen des Werkstückes 2, die unterschiedliche Dicken d₁ und d₂ aufweisen.

Gemäß Fig. 4 ist eine Prüfanordnung gemäß der Erfindung auf den gekrümmten Bereich der Oberfläche des in Fig. 2 dargestellten Werkstückes 2 aufgesetzt. Sie enthält einen Ultraschallprüfkopf 10, der so auf dem Werkstück 2 zentriert ist, dass seine Mittenachse 11 den Radiusmittelpunkt M2 der äußeren Oberfläche 8 schneidet. Im Ultraschallprüfkopf 10 ist eine Ultraschallwandleranordnung 12 angeordnet, deren Sende- und Empfangsfläche 14 einen an den Krümmungsradius der äußeren Oberfläche angepassten-Krümmungsradius aufweist, und im Beispiel konkav gekrümmt ist. Im Idealfall ist dieser Krümmungsradius sowie der Abstand der Sende- und Empfangsfläche 14 zur äußeren Oberfläche 8 bei korrekt positioniertem Ultraschallprüfkopf 10 derart eingestellt, dass sein Radiusmittelpunkt mit dem Radiusmittelpunkt M2 des Krümmungsradius der äußeren Oberfläche 8 zusammenfällt.

Der Ultraschallprüfkopf 10 ist in einer Wasserkammer 16 angeordnet, so dass sich zwischen der Sende- und Empfangsfläche 14 und der äußeren Oberfläche 8 eine mit Wasser gefüllte Vorlaufstrecke befindet. Dichtlippen 18 am Rand der Wasserkammer 16 sorgen dafür, dass die zum Aufrechterhalten der Wasservorlaufstrecke erforderliche Zulaufmenge von Wasser in die Wasserkammer 16 möglichst gering ist.

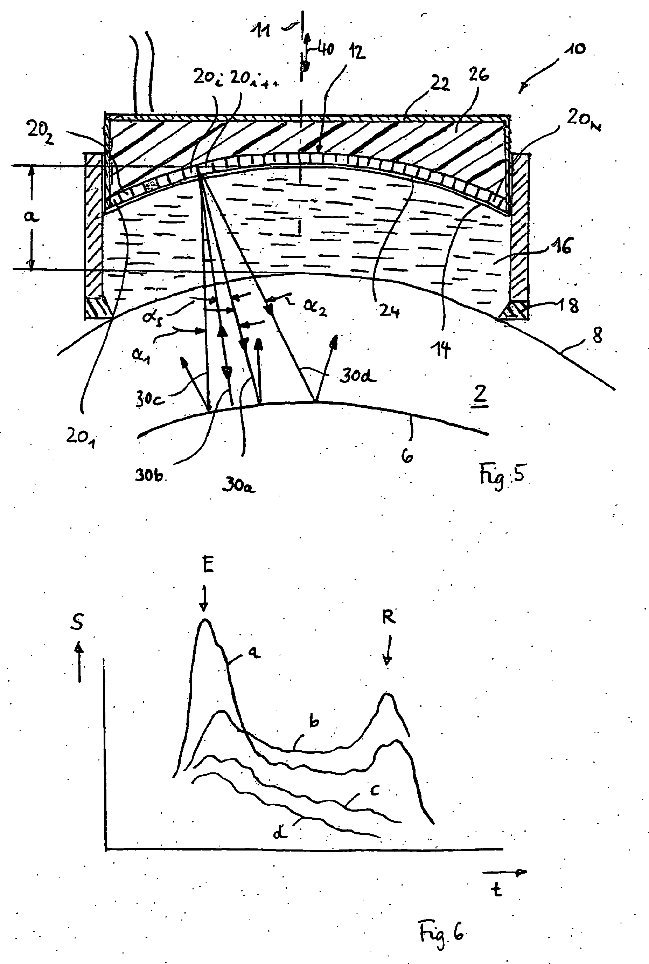

Gemäß Fig. 5 enthält die Ultraschallwandleranordnung 12 eine Mehrzahl N, beispielsweise N = 32, von nebeneinander angeordneten piezoelektrischen Wandlerelementen 20₁, 20₂... 20_{N}, die entlang einer konkav gekrümmten Linie in einem Gehäuse 22 angeordnet sind (gebogenes lineares Wandlerarray). Auf ihrer Sende- und Empfangsseite ist eine λ/4-Anpassschicht 24 angeordnet, die eine akustische Anpassung zwischen dem Schwingermaterial der Wandlerelemente 20₁-20_{N} und dem als Vorlaufstrecke dienenden Koppelmedium, im Ausführungsbeispiel Wasser, dient. Auf ihrer der Sende- und Empfangsseite abgewandten Rückseite grenzen die Wandlerelemente 20₁-20_{N} an einen im Gehäuse 22 angeordneten Dämpfungskörper 26.

Die Wandlerelemente 20₁-20_{N} können unabhängig voneinander angesteuert werden. Dabei können jeweils eine Anzahl n von Wandlerelementen 20₁-20_{N}, vorzugsweise zwei bis vier einander benachbarte Wandlerelemente 20₁-20_{N}, in einem Prüfzyklus zu einer Gruppe zusammengefasst werden. Im Ausführungsbeispiel ist eine Situation veranschaulicht, in der in einem solchen Prüfzyklus zwei benachbarte Wandlerelemente 20ᵢ und 20ᵢ₊₁ zu einer Gruppe zusammengefasst sind. In diesem Prüfzyklus werden in einer Mehrzahl von Prüftakten die Einzelwandler 20ᵢ und 20ᵢ₊₁ jeweils mit unterschiedlichen Verzögerungszeiten relativ zueinander zeitverzögert angesteuert, so dass der von ihnen emittierte Ultraschallstrahl in einem Winkelbereich α₁,α₂ geschwenkt werden kann.

In der Figur 5 ist nun eine Situation eingezeichnet, bei der für den Fall, dass die Zeitverzögerung (Zeitdifferenz) Δt zwischen Wandlerelementen 20ᵢ und 20ᵢ₊₁ gleich Null ist, der von den beiden Wandlerelementen 20ᵢ und 20ᵢ₊₁ senkrecht zur Sende- und Empfangsfläche 14 emittierte Ultraschallstrahl 30a zwar senkrecht auf die äußere Oberfläche 8 des Werkstückes 2 nicht aber auch senkrecht auf dessen innere Oberfläche 6 auftrifft und somit von dieser inneren Oberfläche 6 schiefwinklig reflektiert wird, so dass das zugehörige Rückwandecho von den beiden Wandlerelementen 20ᵢ und 20ᵢ₊₁ nicht oder nur mit einer geringen Signalstärke empfangen wird. Durch zeitliche Verzögerung der Ansteuerüng der Einzelelemente 20ᵢ und 20ᵢ₊₁ wird nun der Abstrahlwinkel α sukzessive in Schritten von beispielsweise 2° in beiden Richtungen variiert und es werden die jeweils zugehörigen Echosignale empfangen. Der Winkelbereich α₁,α₂ beträgt dabei etwa 20° (beispielsweise symmetrisch um α = 0° mit α₁=α₂=10°), so dass innerhalb des Prüfzyklus 11 Prüftakte erfolgen. In der Figur ist nun zu erkennen, dass sich bei einem Abstrahlwinkel αₛ zumindest annähernd eine Situation ergibt, in der der im Prüftakt s emittierte und sich unter einem Winkel αₛ zur Normalen der Sende- und Empfangsfläche 14 ausbreitende Ultraschallstrahl 30b annähernd senkrecht auf die innere Oberfläche 6 auftrifft, so dass das von der inneren Oberfläche 6 emittierte Rückwandecho mit maximaler Signalstärke von den beiden Wandlerelementen 20ᵢ und 20ᵢ₊₁ empfangen wird. Dieses Echosignal mit der maximalen Signalstärke des Rückwandechosignals wird nun für die weitere Auswertung herangezogen, indem beispielsweise die Signalamplitude des Rückwandechosignals mit der Signalamplitude des an der äußeren Oberfläche 8 reflektierten Eintrittsechosignals, beispielsweise durch Verhältnisbildung verglichen wird. Bei dieser Verhältmisbildung wird vorzugsweise das Eintrittsechosignal desjenigen Prüftaktes verwendet, bei dem dieses maximal ist, im Beispiel bei einem Schwenkwinkel α = 0°. Die unter den Schwenkwinkeln α₁ und α₂ jeweils emittierten Ultraschallstrahlen 30c bzw. 30d werden an der inneren Oberfläche 6 ebenfalls in einer Weise reflektiert, dass sie von den Wandlerelementen 20ᵢ und 20ᵢ₊₁ der aktiven Gruppe praktisch nicht mehr empfangen werden.

In der Figur 5 ist aus Gründen der Übersichtlichkeit eine an der äußeren Oberfläche 8 stattfindende Brechung der Ultraschallstrahlen 30a-d nicht dargestellt.

In der Figur 5 ist eine Situation dargestellt, bei der die Krümmung der Sende- und Empfangsfläche 14 der Ultraschallwandleranordnung 12 bzw. des Ultraschallprüfkopfes 10 einen Radius aufweist, der größer ist als der idealisiert als konstant dargestellte Radius der äußeren Oberfläche 8, und bei der für den Fall, dass die Zeitdifferenz, mit der die eine Gruppe bildenden Wandlerelementen 20ᵢ, 20ᵢ₊₁ angesteuert werden, gleich Null ist, der von diesen emittierte Ultraschallstrahl senkrecht auf die äußere Oberfläche 8 auftrifft. Dies setzt voraus, dass der Abstand a zwischen Sende- und Empfangsfläche 14 und äußerer Oberfläche 8 der Differenz dieser beiden Radien entspricht und dass deren Radiusmittelpunkte zusammenfallen. Um dies in gewissen Grenzen zu ermöglichen, ist der Ulträschallprüfkopf 10 mit seiner Ultraschallwandleranordnung 12 in der Wasserkammer 16 axial, d.h. in Richtung der Mittenachse 11 der Ultraschallwandleranordnung 12 verschiebbar angeordnet, wie dies durch den Doppelpfeil 40 veranschaulicht ist. Durch diese Maßnahme können Unterschiede in den Krümmungsradien der äußeren Oberfläche 8 ausgeglichen werden, so dass der im Prüfzyklus erforderliche Winkelbereich minimiert werden kann. Ist beispielsweise der Krümmungsradius der äußeren Oberfläche 8 geringfügig größer, so kann eine konzentrische Situation - ideale Positionierung des Ultraschallprüfkopfes 10 und ideale kreisbogenförmige Krümmung der äußeren Oberfläche 8 vorausgesetzt - dadurch herbeigeführt werden kann, dass der Ultraschallprüfkopf 10 in der Wasserkammer 16 zur äußeren Oberfläche 8 hin axial verschoben wird, d.h. sein Abstand a zu dieser Oberfläche 8 verändert wird. Dadurch ist es möglich, ein Bauteil mit sich in einer Richtung senkrecht zur Krümmungsebene (Zeichenebene der Fig. 1-5) ändernden Krümmungsradius, beispielsweise ein Holm eines Seitenleitwerks eine Flugzeuges, mit einer einzigen Prüfanordnung zu prüfen, indem der Abstand a simultan mit der Bewegung der Prüfanordnung in diese Längsrichtung verändert wird.

Bei nicht idealen Radien ist der Abstand,der Sende- und Empfangsfläche der jeweils eine Gruppe bildenden Wandlerelemente zur äußeren Oberfläche 8 nicht konstant. Die sich ändernde Verlaufstrecke in der Wasserkammer 16 verursacht eine zeitliche Verschiebung der Echosignale. Dies erschwert die Auswertung der Messsignale bei einer bildlichen Darstellung, beispielsweise in einem B-Bild. Um das für eine Gruppe geeignete Zeitfenster für die Echosignale zu ermitteln, wird in einem vorhergehenden Messschritt ein einzelnes Wandlerelement 20ᵢ angesteuert, dessen Ultraschallstrahl in einem großen Winkelbereich emittiert wird, und mit dem der Abstand dieses Wandlerelements 20ᵢ zur äußeren Oberfläche 8 ermittelt wird. Dieser Abstand bzw. die zugehörige Laufzeit wird verwendet, um das Zeitfenster für das Echosignal derjenigen Gruppen, die diesem Wandlerelement 20ᵢ benachbart sind, beispielsweise die Gruppe 20ᵢ₋₂,20ᵢ₋₁ bis 20ᵢ₊₁, 20ᵢ₊₂, festzulegen.

Im Diagramm der Fig. 6 sind die von einer Gruppe in verschiedenen zweiten Prüftakten jeweils in Abhängigkeit von der Laufzeit empfangenen Echosignale S für vier Prüftakte innerhalb eines Prüfzyklus beispielhaft dargestellt. Kurve a zeigt eine Situation, bei der der Ultraschallsstrahl zwar senkrecht auf die äußere Oberfläche 8, nicht jedoch senkrecht auf die innere Oberfläche 6 auftrifft (Zeitdifferenz Δt = 0, zugehöriger Ultraschallstrahl 30a). Dadurch wird ein hohes Eintrittsechosignal E bei relativ niedrigem Rückwandechosignal R erzeugt. Kurve b gibt die Situation wieder, wie sie mit dem Ultraschallstrahl 30b gemessen wird. Das Eintrittsechosignal E ist deutlich reduziert, das Rückwandechosignal R dagegen maximal. Kurven c und d zeigen Situationen, bei denen der Ultraschallstrahl 30c bzw. 30d weder auf die äußere Oberfläche 8 noch auf die innere Oberfläche 6 in einem rechten Winkel auftrifft, so dass weder Eintrittsechosignal E noch Rückwandechosignal R maximal sind. Für die Auswertung werden nun die Echosignale der Kurven a und b, d.h. die Echosignale der zu den Schwenkwinkeln 0° und αₛ gehörenden Prüftakte herangezogen, indem beispielsweise die Signalamplitude des Rückwandechosignals R des die Kurve b erzeugenden Prüftaktes durch die Signalamplitude des Eintrittsechosignals E des die Kurve a erzeugenden Prüftaktes dividiert wird.

## Patentansprüche

1. Verfahren zur Ultraschallprüfung eines Werkstückes (2) in einem gekrümmten Bereich seiner Oberfläche, insbesondere eines aus einem Faserverbundwerkstoff bestehenden Werkstückes (2), bei dem in diesem Bereich ein Ultraschallprüfkopf (10) an das Werkstück akustisch angekoppelt wird, der eine aus einer Mehrzahl (N) von nebeneinander angeordneten einzeln ansteuerbaren Wandlerelementen (20ᵢ) aufgebaute Ultraschallwandleranordnung (12) enthält, wobei in zeitlich aufeinanderfolgenden Prüfzyklen jeweils eine Anzahl (n) von Wandlerelementen (20ᵢ) zu einer Gruppe zusammengefasst und in einer Mehrzahl von Prüftakten innerhalb dieses Prüfzyklus untereinander zeitverzögert derart angesteuert werden, dass der gesendete Ultraschallstrahl (30a-d) in diesem Prüfzyklus in einem vorgegebenen Winkelbereich (α₁,α₂) geschwenkt wird, so dass von jeder Gruppe eine der Anzahl der Prüftakte entsprechende Anzahl von Echosignalen aus unterschiedlichen Richtungen des Werkstückes (2) empfangen werden, und bei dem die Echosignale der Prüftakte ermittelt und zur Auswertung verwendet werden, bei denen ein von einer Rückwand (6) des Werkstückes (2) empfangenes Rückwandechosignal (R) bzw. ein von der Oberfläche (8) des Werkstückes (2) empfangenes Eintrittsechosignal (E) maximal ist.

2. Verfahren nach Anspruch 1, bei dem die Ultraschallwandleranordnung (12) eine an die Krümmung der Oberfläche (8) angepasste gekrümmte Sende- und Empfangsfläche (14) aufweist.

3. Verfahren nach Anspruch 1 oder 2, bei dem zur akustischen Ankopplung eine Wasservorlaufstrecke verwendet wird.

4. Verfahren nach Anspruch 3, bei dem der Abstand (a) des Prüfkopfes (10) zur Oberfläche (8) verändert wird.

5. Prüfanordnung umfassend eine Wasserkammer (16) und einen Ultraschallprüfkopf (10), der eine aus einer Mehrzahl von nebeneinander entlang einer mit einem Radius konkav gekrümmten Linie angeordneten einzeln ansteuerbaren Wandlerelementen (20ᵢ) aufgebaute Ultraschallwandleranordnung (12) enthält, und der in der als Vorlaufstrecke dienenden Wasserkammer (16) in Richtung seiner zum Mittelpunkt dieses Radius verlaufenden Mittenachse (11) verschiebbar angeordnet ist, eingerichtet zum Durchführen des Verfahrens nach einem der vorhergehenden Ansprüche, wobei in zeitlich aufeinanderfolgenden Prüfzyklen jeweils eine Anzahl (n) von Wandlerelementen (20ᵢ) zu einer Gruppe zusammengefasst und in einer Mehrzahl von Prüftakten innerhalb dieses Prüfzyklus untereinander zeitverzögert derart angesteuert werden, dass der gesendete Ultraschallstrahl (30a-d) in diesem Prüfzyklus in einem vorgegebenen Winkelbereich (α1,α2) geschwenkt wird, so dass von jeder Gruppe eine der Anzahl der Prüftakte entsprechende Anzahl von Echosignalen aus unterschiedlichen Richtungen des Werkstückes (2) empfangen werden, und bei dem die Echosignale der Prüftakte ermittelt und zur Auswertung verwendet werden, bei denen ein von einer Rückwand (6) des Werkstückes (2) empfangenes Rückwandechosignal (R) bzw. ein von der Oberfläche (8) des Werkstückes (2) empfangenes Eintrittsechosignal (E) maximal ist.

6. Prüfanordnung nach Anspruch 5, bei der die Wasserkammer (16) auf einer dem Ultraschallprüfkopf (10) abgewandten Ankoppelfläche offen ist und ein die Ankoppelfläche umgebender Rand mit einer elastischen Dichtlippe (18) versehen ist.

7. Prüfanordnung nach Anspruch 5 oder 6, bei der die Ultraschallwandleranordnung (12) eine gekrümmte Sendefläche aufweist.

## Claims

1. Method for the ultrasonic testing of a workpiece (2) in a curved region of its surface, in particular of a workpiece (2) consisting of a fibre-composite material, wherein an ultrasonic test head (10) is connected acoustically to the workpiece in this region, which contains an ultrasonic transducer arrangement (12) constructed from a plurality (N) of individually activatable transducer elements (20ᵢ) arranged alongside one another, wherein a respective number (n) of transducer elements (20ᵢ) are combined to form a group in chronologically successive test cycles and activated in a plurality of test pulses within this test cycle in a time-delayed manner with respect to one another in such a way that the transmitted ultrasonic beam (30a-d) is pivoted in this test cycle in a predetermined angular range (α₁, α₂), such that a number of echo signals corresponding to the number of test pulses is received by each group from different directions of the workpiece (2), and wherein the echo signals of the test pulses are determined and used for evaluation, wherein a back-wall echo signal (R) received by a back wall (6) of the workpiece (2) or an input echo signal (E) received by the surface (8) of the workpiece (2) is at a maximum.

2. Method according to claim 1, wherein the ultrasonic transducer arrangement (12) has a curved transmitting and receiving face (14) adapted to the curvature of the surface (8).

3. Method according to claim 1 or 2, wherein a water initial segment is used for the acoustic coupling.

4. Method according to claim 3, wherein the gap (a) between the test head (10) and the surface (8) is altered.

5. Test arrangement comprising a water chamber (16) and an ultrasonic test head (10), which contains an ultrasonic transducer arrangement (12) constructed from a plurality of individually activatable transducer elements (20ᵢ) arranged alongside one another along a concavely-curved'line with a radius, and which is arranged displaceably in the water chamber (16) serving as an initial segment in the direction of its central axis (11) running towards the central point of this radius, configured to carry out the method according to one of the preceding claims, wherein a respective number (n) of transducer elements (20ᵢ) are combined to form a group in chronologically successive test cycles and activated in a plurality of test pulses within this test cycle in a time-delayed manner with respect to one another in such a way that the transmitted ultrasonic beam (30a-d) is pivoted in this test cycle in a predetermined angular range (α₁, α₂), such that a number of echo signals corresponding to the number of test pulses is received by each group from different directions of the workpiece (2), and wherein the echo signals of the test pulses are determined and used for evaluation, wherein a back-wall echo signal (R) received by a back wall (6) of the workpiece (2) or an input echo signal (E) received by the surface (8) of the workpiece (2) is at a maximum.

6. Test arrangement according to claim 5, wherein the water chamber (16) is open on a coupling face facing away from the ultrasonic test head (10) and an edge surrounding the coupling face has an elastic sealing lip (18) added to it.

7. Test arrangement according to claim 5 or 6, wherein the ultrasonic transducer arrangement (12) has a curved transmission face.

## Revendications

1. Procédé pour la vérification par ultrasons d'une pièce à usiner (2) dans une zone incurvée de sa surface, en particulier d'une pièce à usiner (2) se composant d'un matériau composite à renfort fibreux, dans lequel, dans cette zone, une tête de sonde à ultrasons (10) est couplée de manière acoustique à la pièce à usiner, ladite tête contenant un transducteur ultrasonore (12) constitué d'une pluralité (N) d'éléments transducteurs (20ᵢ) disposés les uns à côté des autres et pouvant être commandés individuellement, de sorte que, en cycles de tests successifs, un certain nombre (n) d'éléments transducteurs (20ᵢ) réunis en un groupe sont commandés avec un retard entre eux en une pluralité de cadences de vérification au sein de ce cycle de test de manière à ce que le rayonnement ultrasonore (30 a-d) envoyé lors de ce cycle de test pivote selon une plage angulaire prédéterminée (α1, α2) de sorte que chaque groupe réceptionne un nombre de signaux d'échos correspondant au nombre de cadences de vérification en provenance de différentes directions de la pièce à usiner (2), et dans lequel les signaux d'échos des cadences de vérification sont détectés et sont utilisés pour l'évaluation, un signal d'écho de paroi arrière (R) réceptionné par une paroi arrière (6) de la pièce à usiner (2) et/ou un signal d'écho d'entrée (E) réceptionné par la surface (8) de la pièce à usiner (2) étant maximal.

2. Procédé selon la revendication 1, dans lequel le dispositif transducteur ultrasonore (12) présente une surface d'émission et de réception (14) incurvée adaptée à l'incurvation de la surface (8).

3. Procédé selon la revendication 1 ou 2, dans lequel on utilise un trajet d'eau pour le couplage acoustique.

4. Procédé selon la revendication 3, dans lequel on modifie la distance (a) entre la tête de sonde (10) et la surface (8).

5. Dispositif de test comprenant une chambre à eau (16) et une tête de sonde à ultrasons (10), laquelle contient un dispositif transducteur ultrasonore (12) constitué d'une pluralité d'éléments transducteurs (20ᵢ) disposés les uns à côté des autres le long d'une ligne courbée de manière concave avec un rayon et pouvant être commandés individuellement, laquelle est disposée de manière à pouvoir coulisser dans la chambre à eau (16) servant de trajet en direction de son axe central (11) s'étendant vers le point central de ce rayon, pour la mise en oeuvre du procédé selon l'une des revendications précédentes, de sorte que, en cycles de test successifs, un nombre (n) d'éléments transducteurs (20ᵢ) réunis en un groupe sont commandés avec retard entre eux en une pluralité de cadences de vérification au sein de ce cycle de test de manière à ce que le rayonnement ultrasonore (30 a-d) envoyé lors de ce cycle de test pivote selon une plage angulaire prédéterminée (α1, α2) de sorte que chaque groupe réceptionne un nombre de signaux d'échos correspondant au nombre de cadences de vérification en provenance de différentes directions de la pièce à usiner (2), et dans lequel les signaux d'échos des cadences de vérification sont détectés et sont utilisés pour l'évaluation, un signal d'écho de paroi arrière (R) réceptionné par une paroi arrière (6) de la pièce à usiner (2) et/ou un signal d'écho d'entrée (E) réceptionné par la surface (8) de la pièce à usiner (2) étant maximal.

6. Dispositif de test selon la revendication 5, dans lequel la chambre à eau (16) est ouverte sur une surface d'accouplement tournant le dos à la tête de sonde à ultrasons (10) et un bord entourant la surface d'accouplement étant muni d'une garniture d'étanchéité (18) élastique.

7. Dispositif de test selon la revendication 5 ou 6, dans lequel le dispositif transducteur ultrasonore (12) présente une surface d'émission incurvée.
